# EUROPEAN PATENT SPECIFICATION

(11) **EP 1 854 385 B1**
(45) Date of publication and mention of the grant of the patent: **15.07.2015**
(21) Application number: 07107713.5
(22) Date of filing: 08.05.2007
(51) Int. Cl.: A47J 31/44, G01F 23/02

(54) **Externally visible duct for infusion machine**
Von außen sichtbare Leitung für ein Infusionsgerät
Tuyau visible extérieurement pour machine à infusion

(30) Priority: 10.05.2006 IT TO20060068 U
(43) Date of publication of application: 14.11.2007
(73) Proprietor: Rancilio Group S.p.A., 20010 Villastanza Di Parabiago (MI) (IT)
(72) Inventor: Carbonini, Carlo, 20010 Villastanza di Parabiago (MI) (IT)
(74) Representative: Robba, Eugenio

(56) References cited:
- ES-A2- 2 060 500
- FR-A- 1 234 379
- US-A- 5 060 560

## Description

### Technical field

The present invention generally relates to an externally visible duct for an infusion machine, wherein the infusion machine includes at least one boiler for heating the liquid necessary for preparing infusions and the duct is coupled with the boiler so as to show the level of the liquid in the boiler.

Specifically, the present invention relates to an externally visible duct or level pipe arranged to show the level or free surface of a liquid, e.g. water, present in the boiler of an automatic espresso coffee machine.

### Prior Art

Externally visible level pipes of an infusion machine are known, which enable an operator of the machine to detect the level of liquid in the boiler.

In particular, it is known that infusion machines, particularly espresso coffee machines, comprise a boiler mounted within a body and hidden from view, where water for infusion preparation is heated. It is also known that such machines generally include a transparent duct (externally visible duct or level pipe), which, when located in a visible position and suitably coupled with the boiler so as to exploit the physical principle of communicating vessels, is arranged to make visible the level of liquid in the boiler.

The prior art externally visible ducts are made of transparent material, e.g. glass, Teflon or other plastic material, and they preferably have a cylindrical shape. Such ducts have a first end coupled with a first connection, arranged at a top position on the boiler, through a first fitting made e.g. of brass and a first duct made e.g. of copper, and a second end coupled with a second connection, arranged at a bottom position on the boiler, through a second fitting and a second duct with equivalent characteristics to the described ones.

Document ES-A2-2060500 discloses, for instance, a system for displaying the level of a liquid in a boiler of an espresso coffee machine comprising an upper and lower duct respectively having each a first end connected to the boiler and a second end connected, by means of a respective joint, to an externally visible duct or level pipe.

Document FR-A-1 234 379 discloses a level indicator for a coffee machine comprising a vertical visible duct made of glass connected to a boiler through upper and lower horizontal pipe fittings.
The two pipe fittings are arranged to lock, in use, flow of vapour and water, respectively, in case of breaking of the visible duct or level pipe.

According to the Applicant, the whole of the ducts and fittings forms a particularly complex assembly generating a number of problems.

Firstly, the assembly has a plurality of connecting points and hence a plurality of points where leaks, e.g. of steam or water, can occur.

Secondly, the assembly, having a plurality of ducts and fittings, entails particularly long assembling times.

Lastly, since the assembly includes rigid ducts, e.g. the copper ducts for coupling with the boiler, mounting the externally visible duct and the fittings is a particularly difficult and critical operation.

### Description of the invention

It is an object of the present invention to solve the above-mentioned problems of the prior art.

The object is achieved by the externally visible duct for an infusion machine having the features disclosed in the appended claims.

The present invention also relates to a boiler and an infusion machine, respectively, including the externally visible duct according to the invention.

The claims are an integral part of the technical teaching provided here in respect of the invention.

According to a preferred embodiment, the externally visible duct for a boiler of an infusion machine includes first and second coupling members adapted to be directly coupled with the boiler.

According to another feature of the present invention, the externally visible duct has one or more bendings adapted to locate a duct portion in a readily visible position and to locate the duct ends near the boiler, respectively.

According to yet another feature of the present invention, the externally visible duct is made of plastic material, e.g. Teflon FEP.

### Brief Description of the Figures

The above and other features of the present invention will become apparent from the following description of a preferred embodiment, made for exemplifying and non-limiting purposes with reference to the accompanying drawings, in which elements denoted by a same or similar numerical reference correspond to components having the same or similar function and construction, and in which:
- Fig. 1 is an overall view of a coffee machine including the externally visible duct according to the invention; and
- Fig. 2 shows a detailed view of the externally visible duct according to the invention.

### Description of a Preferred Embodiment

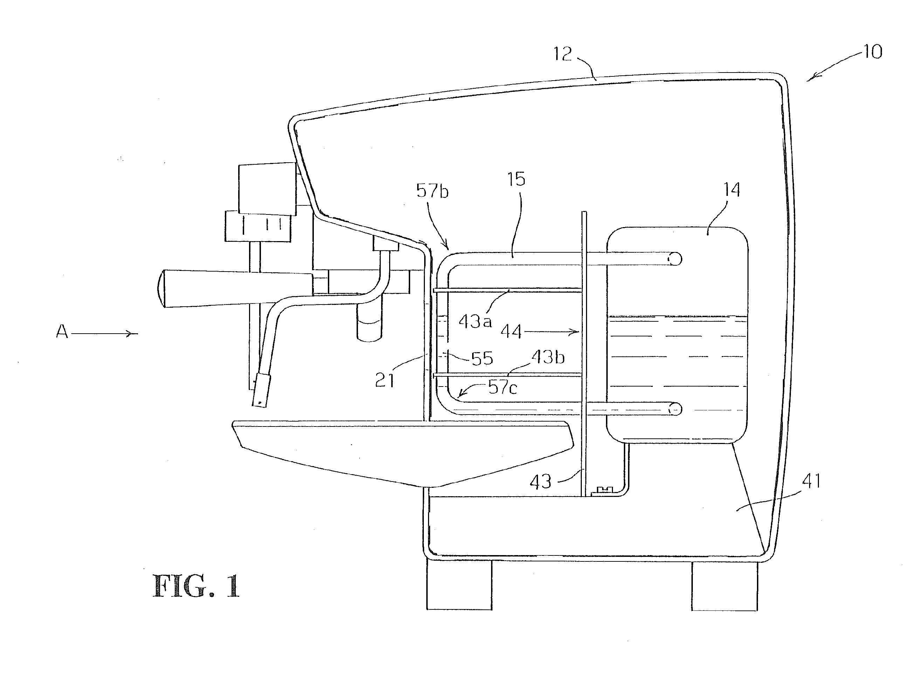

Referring to Fig. 1, an infusion machine 10, e.g. an espresso coffee machine, includes a body 12 enclosing a boiler 14, of known type, for heating the liquid necessary for infusion preparation, e.g., water, and an externally visible duct (level pipe or duct) 15.

Body has, in a front area A, a viewing window 21, of known type, enabling an operator to see at least a portion 55 of externally visible duct 15.

In the preferred embodiment, duct 15 is made of a single piece of transparent plastic material and, in use, the duct ends can advantageously be directly fastened to boiler 14.

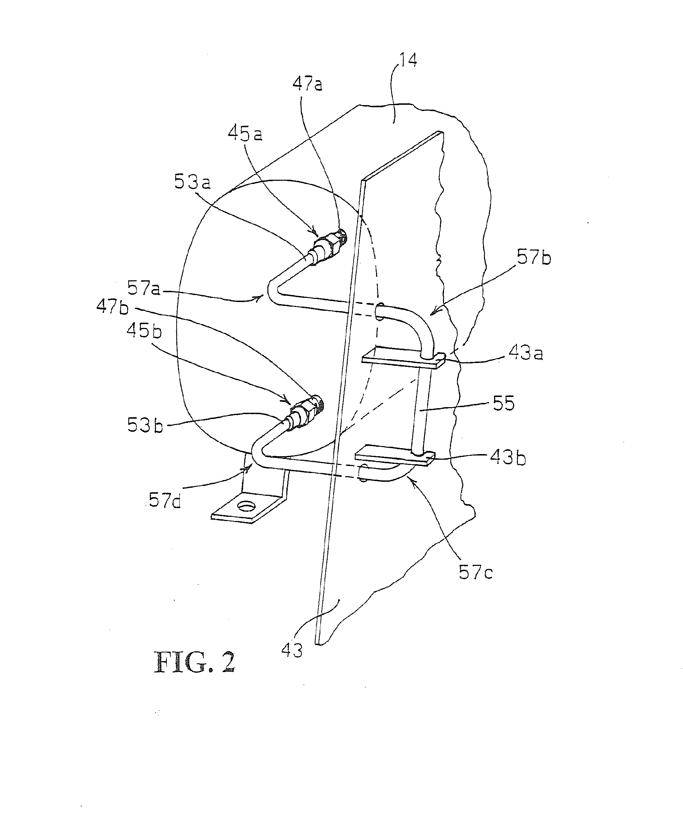

More particularly, according to the preferred embodiment, the externally visible duct 15 is thermally preformed so as to form a predetermined number of bendings, in the exemplary embodiment four bendings 57a, 57b, 57c and 57d (Figs. 1, 2). Those bendings are arranged to locate portion 55, visible by the operator and preferably rectilinear, in correspondence of window 21, and to locate two fastening ends 53a and 53b, respectively, in correspondence of boiler 14, to which said ends can be directly fastened.

Preferably, the duct is made of FEP (modified copolymer of tetraFluoroEthylene and hexafluoroPropylene) or Teflon FEP, e.g. of the type TE-9302-N produced by DuPont company, but other materials having characteristics ensuring transparency and preforming capability may be used without departing from the scope of the invention as disclosed.

Fittings 45a and 45b, of known type, are fastened in known manner to respective fastening ends (duct ends) 53a and 53b. Said fittings include threaded nuts which, in use, are arranged to be coupled, in known manner, with corresponding threaded boiler joints (connecting points) 47a and 47b, known per se, which are soldered or fastened to boiler 14.

In the preferred embodiment, the boiler 14 is supported by a base bracket 41, e.g. fastened to the base of body 12.

More preferably, base bracket 41 has fastened thereto a supporting bracket 43 configured so as to support at least the rectilinear, externally visible duct portion 55 in position, in correspondence of the viewing window 21.

More particularly, supporting bracket 43 includes, in the preferred embodiment, a pair of plates 43a and 43b that can be removably coupled with the ends of externally visible portion 55, near bendings 57a and 57c.

Preferably, the supporting bracket 43 includes, in correspondence of the surface lying between plates 43a and 43b, a preferably white background panel, adapted to enable an easy view of portion 55 through window 21.

Of course, in other embodiments, bracket 41 can be missing and plates 43a and 43b, if provided, can be directly fastened or soldered to boiler 14.

When mounting duct 15, in the preferred embodiment, the duct 15 itself, already preformed, is fastened to boiler 14 by means of fittings 45a and 45b and firmly located with its portion 55 in correspondence of window 21 by coupling plates 43a and 43b with the ends of rectilinear portion 55.

After such an operation, externally visible duct 15 is operative to make the level of the liquid in boiler 14 visible to the operator.

The operation of duct 15, as described, is equivalent to the operation of the known assemblies for coupling with the boiler and including the prior art ducts. Advantageously however, since according to the present invention duct 15 is made of a single piece, only two fittings are needed for connection to boiler 14.

Still more advantageously, the duct as described can readily replace prior art externally visible duct assemblies including at least one duct, multiple fitting pairs and multiple coupling ducts. Indeed, thanks to the invention, suitably shaped duct 15 is arranged to achieve, by means of a single duct, one fitting pair and multiple bendings, a complex assembly which otherwise could be achieved only in a much more complex manner.

Obvious changes and modifications can be made to the above description, in respect of sizes, shapes, materials, components and connections, as well as in respect of the details of the disclosed construction and the operating method, without departing from the spirit of the invention as defined in the following claims.

## Claims

1. An externally visible duct for a boiler (14) of an infusion machine (10), said duct including
- a portion (55) arranged to show the level of the liquid in the boiler (14);
- one or more bendings located between first and second ends of said portion (55) and first and second coupling members (45a, 45b, 53a, 53b), respectively, of said duct (15);
said first and second coupling members (45a, 45b, 53a, 53b) of said duct (15) respectively including
- first and second ends (53a, 53b) of said duct (15);
- first and second fitting members (45a, 45b) arranged to be rigidly coupled directly with said boiler (14) at corresponding connection points (47a, 47b) thereof;
**characterised in that** the duct (15) is made in a single piece and said first and second fitting members (45a, 45b) are fastened to said first and second ends (53a, 53b) of the duct (15), respectively.

2. The externally visible duct as claimed in claim 1, **characterised in that** first and second coupling members (45a, 45b, 53a, 53b) of said duct are threaded and are arranged to be directly coupled with said connection points (47a, 47b) of said boiler (14).

3. The externally visible duct as claimed in any one of preceding claims, **characterised in that** it is associable, in use, with at least one plate (43a, 43b) configured to steadily maintain the positioning of the duct (15) relative to said boiler (14).

4. The externally visible duct as claimed in any one of claims 1 to 2, **characterised in that** it is associable, in use, with a bracket (43) having at least one plate (43a, 43b) configured to steadily maintain the positioning of the duct (15) relative to said boiler (14).

5. The externally visible duct as claimed in any one of preceding claims, **characterised in that** it is made of transparent plastic material.

6. The externally visible duct as claimed in claim 5, **characterised in that** said plastic material is an FEP-like material.

7. A boiler (14) for an infusion machine (10), **characterised in that** it includes an externally visible duct as claimed in any one of claims 1 to 6.

8. An infusion machine (10), including:
- a boiler (14) arranged to heat a liquid necessary for preparing said infusions,
- an externally visible duct (15) as claimed in any one of claims 1 to 6, coupled with said boiler (14).

## Patentansprüche

1. Von außen sichtbare Leitung für einen Boiler (14) einer Aufgusszubereitungsmaschine (10), wobei die Leitung umfasst
- einen Abschnitt (55), der eingerichtet ist, um den Flüssigkeitspegel in dem Boiler (14) anzuzeigen;
- eine oder mehrere Biegungen, die zwischen einem ersten bzw. einem zweiten Ende des Abschnitts (55) und ersten bzw. zweiten Kupplungselementen (45a, 45b, 53a, 53b), der Leitung (15) angeordnet sind;
wobei die ersten und zweiten Kupplungselemente (45a, 45b, 53a, 53b) der Leitung (15) umfassen
- eine erste bzw. eine zweite Ende (53a, 53b) der Leitung (15);
- ein erstes bzw. ein zweites Verbindungselement (45a, 45b), die eingerichtet sind, um direkt mit dem Boiler (14) an entsprechenden Verbindungsstellen (47a, 47b) davon starr verbunden zu sein;
**dadurch gekennzeichnet, dass** die Leitung (15) einteilig ausgebildet ist und das erste und das zweite Verbindungselement (45a, 45b) an dem ersten bzw. an dem zweiten Ende (53a, 53b) der Leitung (15) befestigt sind.

2. Von außen sichtbare Leitung nach Anspruch 1, **dadurch gekennzeichnet, dass** die ersten und zweiten Kupplungselemente (45a, 45b, 53a, 53b) der Leitung mit einem Gewinde versehen sind und eingerichtet sind, um direkt mit den Verbindungsstellen (47a, 47b) des Boilers (14) verbunden zu sein.

3. Von außen sichtbare Leitung nach irgendeinem der vorhergehenden Ansprüche, **dadurch gekennzeichnet, dass** sie, im Einsatz, mindestens einer Platte (43a, 43b) zuordenbar ist, die eingerichtet ist, um die Position der Leitung (15) relativ zu dem Boiler (14) dauerhaft aufrecht zu erhalten.

4. Von außen sichtbare Leitung nach irgendeinem der Ansprüche 1 bis 2, **dadurch gekennzeichnet, dass** sie, im Einsatz, einem Bügel (43) zuordenbar ist, der mindestens eine Platte (43a, 43b) aufweist, die eingerichtet ist, um die Position der Leitung (15) relativ zu dem Boiler (14) dauerhaft aufrecht zu erhalten.

5. Von außen sichtbare Leitung nach irgendeinem der vorhergehenden Ansprüche, **dadurch gekennzeichnet, dass** sie aus einem durchlässigen Kunststoffmaterial besteht.

6. Von außen sichtbare Leitung nach Anspruch 5, **dadurch gekennzeichnet, dass** das Kunststoffmaterial ein FEP-ähnliches Material ist.

7. Boiler (14) für eine Aufgusszubereitungsmaschine (10), **dadurch gekennzeichnet, dass** er eine von außen sichtbare Leitung nach irgendeinem der Ansprüche 1 bis 6 umfasst.

8. Aufgusszubereitungsmaschine (10), umfassend:
- einen Boiler (14), der eingerichtet ist, eine für Aufgusszubereitung geeignete Flüssigkeit zu erhitzen,
- eine von außen sichtbare Leitung (15) nach irgendeinem der Ansprüche 1 bis 6, die mit dem Boiler (14) verbunden ist.

## Revendications

1. Tuyau visible extérieurement pour une chaudière (14) d'une machine à infusion, ledit tuyau comportant
- une partie (55) agencée de façon à indiquer le niveau du liquide dans la chaudière (14);
- un ou plusieurs coudes situés entre une première et une deuxième extrémité de ladite partie (55) et un premier et un deuxième élément de couplage (45a, 45b, 53a, 53b), respectivement, dudit tuyau (15),
lesdits premier et deuxième élément de couplage (45a, 45b, 53a, 53b) dudit tuyau (15) comprenant respectivement:
- une première et une deuxième extrémité (53a, 53b) dudit conduit (15);
- un premier et un deuxième élément de raccordement (45a, 45b) agencés de manière à être couplés de manière rigide directement à ladite chaudière (14) en respectifs points de connexion (47a, 47b) correspondants de celle-ci;
**caractérisé en ce que** ledit tuyau (15) est fait en une seule pièce et lesdits premier et deuxième élément de raccordement (45a, 45b) sont fixés auxdites première et deuxième extrémité (53a, 53b) du tuyau (15), respectivement.

2. Tuyau visible extérieurement selon la revendication 1, **caractérisé en ce que** lesdits premier et deuxième élément de couplage (45a, 45b, 53a, 53b) dudit tuyau sont filetés et agencés pour être directement couplés avec lesdits points de connexion (47a , 47b) de ladite chaudière (14).

3. Tuyau visible extérieurement selon l'une quelconque des revendications précédentes, **caractérisé en ce qu**'il est associable, pendant son utilisation, avec au moins une plaque (43a, 43b) configurée pour maintenir de façon stable la position du tuyau (15) par rapport à ladite chaudière (14).

4. Tuyau visible extérieurement selon l'une quelconque des revendications 1 à 2, **caractérisé en ce qu**'il est associable, pendant son utilisation, avec un étrier (43) comportant au moins une plaque (43a, 43b) configurée pour maintenir de façon stable la position du tuyau (15) par rapport à ladite chaudière (14).

5. Tuyau visible extérieurement selon l'une quelconque des revendications précédentes, **caractérisé en ce qu**'il est réalisé en un matériau plastique transparent.

6. Tuyau visible extérieurement selon la revendication 5, **caractérisé en ce que** ledit matériau plastique est un matériau du type FEP.

7. Chaudière (14) pour une machine à infusion (10), **caractérisée en ce qu**'elle comporte un tuyau visible extérieurement selon l'une quelconque des revendications 1 à 6.

8. Machine à infusion (10), comprenant:
- une chaudière (14) agencée pour chauffer un liquide nécessaire à la préparation de ces infusions,
- un tuyau visible extérieurement (15) selon l'une quelconque des revendications 1 à 6, couplé à ladite chaudière (14).
